(19) **Europäisches Patentamt / European Patent Office / Office européen des brevets**

(11) **EP 3 536 448 A1**

(12) **EUROPÄISCHE PATENTANMELDUNG**

(43) Veröffentlichungstag:
**11.09.2019   Patentblatt 2019/37**

(51) Int Cl.:
**B23Q 3/06** *(2006.01)*      **B23B 31/117** *(2006.01)*
**B23B 31/20** *(2006.01)*      **B23B 31/40** *(2006.01)*
**B23Q 3/10** *(2006.01)*

(21) Anmeldenummer: **18160486.9**

(22) Anmeldetag: **07.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Knäbel, Horst**
**40667 Meerbusch (DE)**

(72) Erfinder: **Knäbel, Horst**
**40667 Meerbusch (DE)**

(74) Vertreter: **KNH Patentanwälte Neumann Heine Taruttis PartG mbB**
**Postfach 10 33 63**
**40024 Düsseldorf (DE)**

(54) **SPANNELEMENT ZUR POSITIONIERUNG UND/ODER FIXIERUNG EINES WERKSTÜCKS ODER WERKZEUGS**

(57)      Fèr die Positionierung und/oder Fixierung eines Werkstücks (3) oder Werkzeugs, wird ein Spannelement (1) umfassend eine Mehrzahl von Tragstegen (4) und eine Mehrzahl von elastischen Zwischengliedern (5) vorgeschlagen, wobei sich das Spannelement (1) durch Dehnung oder Stauchung der elastischen Zwischenglieder (5) aufweiten oder zusammendrücken lässt. Die Tragstege (4) und die elastischen Zwischenglieder (5) sind einstückig miteinander ausgebildet und endlos miteinander verbunden.

Fig. 6

**Beschreibung**

Die vorliegende Erfindung betrifft ein Spannelement zur Positionierung und/oder Fixierung eines Werkstücks oder Werkzeugs, umfassend eine Mehrzahl von Tragstegen und eine Mehrzahl von elastischen Zwischengliedern, wobei sich das Spannelement durch Dehnung oder Stauchung der elastischen Zwischenglieder aufweiten oder zusammendrücken lässt.

Besonders bei der mechanischen Endbearbeitung und Endkontrolle von Werkstücken, die auf einer ihrer Bezugsfläche aufgenommen und gespannt werden müssen, kommt es darauf an, diese sehr genau und exakt reproduzierbar zu positionieren, zu fixieren und zu spannen, um sie maß-, form- und lagegerecht fertigen bzw. vermessen zu können. Dazu sind Spanneinrichtungen erforderlich, die sich durch eine hohe Form- und Lagegenauigkeit sowie eine hohe Formstabilität auszeichnen.

Ähnlich verhält es sich beim Spannen von Werkzeugen. Nur mit einem exakt positionierten Werkzeug kann die erwartete Maßhaltigkeit eines zu bearbeitenden Werkstücks erzielt werden. Darüber hinaus führt eine Rundlaufabweichung zu ungleicher Beanspruchung des Werkzeugs und damit zur Minderung der Standzeit.

Es sind entsprechende handelsübliche Spannelemente bekannt bei denen die elastischen Zwischenglieder als auf die Tragstege aufvulkanisierte Zwischenlagen ausgebildet sind. Die Anzahl der Tragstege und der Zwischenglieder ist aus Fertigungsgründen üblicherweise auf 3 bis 6 pro Spannelement beschränkt. Als Material für diese Zwischenlagen werden im Allgemeinen Gummi oder gummielastische Kunststoffe verwendet.

Als nachteilig wird angesehen, dass diese Zwischenlagen sowie ihre Verbindung mit den meist aus Werkzeugstahl bestehenden Tragstegen nicht dauerfest gegen zahlreiche Flüssigkeiten und nur in einem eingeschränkten Temperaturbereich brauchbar sind, zum Quellen neigen, sowie einem natürlichen Alterungsprozess unterliegen, und dass die größere Wärmedehnung der Zwischenlagen gegenüber den metallischen Tragstegen zum Anstieg unkontrollierbarer Spannungen in den Vulkanisationszonen führt.

Bei der Verwendung eines derartigen, beispielweise konzentrischen Spannelements, das als hülsenförmiger Körper zwischen einem als Stützelement ausgebildeten kegelförmigen Aufnahmedorn bzw. einer kegelförmigen Aufnahmehülse und einem Werkstück oder Werkzeug eingesetzt wird, beträgt die damit erzielbare Rundlaufgenauigkeit bei eingeschränktem Spannbereich bestenfalls 5 bis 10 $\mu$m. Bei Nutzung des vollen Spannbereichs nimmt die erreichbare Rundlaufgenauigkeit in Folge der nachfolgend beschriebenen Druckflächenverlagerung progressiv ab.

Des Weiteren sind handelsübliche Spannelemente in Form konzentrischer Hülsen bekannt, deren eine Mantelfläche zylindrisch und die andere kegelförmig ausgebildet ist. Diese üblicherweise aus Werkzeugstahl gefertigten einstückigen Spannelemente verfügen über keine elastischen Zwischenglieder, über die sich das Spannelement aufweiten oder zusammendrücken lassen würde. Diese Spannelemente weisen lediglich im Wechsel von beiden Stirnflächen ausgehende Schlitze auf, die sich jedoch nur soweit erstrecken dürfen, dass die durch die Schlitze entstehenden Hülsensegmente, eine Art Tragstege, zumindest auf einer Stirnseite noch über sogenannte Brückenstege miteinander verbunden bleiben. Der Nachteil derartiger Spannelemente besteht darin, dass die Hülsensegmente beim Fixieren bzw. Spannen eines Werkstücks oder Werkzeugs auf Grund der Biegesteifigkeit der Brückenstege aus der parallelen Lage zu ihrer Bezugsachse gedrängt und je nach Steifigkeit und Härte der aufeinander einwirkenden Teile unkontrolliert deformiert sowie über ihre Länge radial verbogen werden. Da sich dabei die Druckfläche der Hülsensegmente vom Zentrum auf eine der weit weniger präzis ausgeführten Kante verlagert, verschlechtert sich im gleichen Maße auch die Rundlaufgenauigkeit unkontrollierbar.

Auch hierbei gilt, dass bei Nutzung des vollen Spannbereichs die erreichbare Rundlaufgenauigkeit progressiv abnimmt.

Der vorliegenden Erfindung liegt deshalb die Aufgabe zugrunde, ein Spannelement zu schaffen, dass in Bezug auf die Formstabilität und Rundlaufgenauigkeit sowie die Medien-, Temperatur- und Alterungsbeständigkeit gegenüber den derartigen, bisher bekannten Spannelementen wesentliche Vorteile bietet.

Zur Lösung der Aufgabe wird gemäß Erfindung bei einem Spannelement gemäß der eingangs beschriebenen Gattung vorgeschlagen, dass die Tragstege und die elastischen Zwischenglieder einstückig miteinander ausgebildet und endlos miteinander verbunden sind.

Wenn ein solches, erfindungsgemäßes Spannelement mit einer kegeligen Mantelfläche zum Spannen eines Werkstücks oder Werkzeugs auf eine in gleicher Weise kegelige Mantelfläche eines Stützelements axial zu bewegt wird, gleiten die Tragstege des Spannelements auf der Oberfläche des Stützelements bis ihre gegenüberliegende, beispielsweise zylindrische Mantelfläche zur Anlage an das Werkstück bzw. an das Werkzeug gelangt. Da die elastischen Zwischenglieder so gestaltet sind, dass sie dabei nur gleichmäßig gedehnt oder gestaucht werden können, bleiben die ursprünglich parallel zur Bezugsachse und einem Bezugssystem verlaufenden Flächen der Tragstege auch weiterhin parallel ausgerichtet und die Tragstege selbst bleiben frei von jeglichen Querkräften. Bei dem Bezugssystem handelt es sich um Bezugssystem nach ISO 5459: 1981.

Es ist auch möglich die innere und äußere Mantelfläche eines erfindungsgemäßen Spannelements zylindrisch auszuführen und es dafür beidseitig mit kegelförmigen Zentrierfasen zu versehen. Mit einem solchen beliebig langen Spannelement lassen sich beispielsweise Werkstücke sehr leicht und sehr genau zwischen den Spitzen einer Dreh- oder Schleifmaschine sowie einer entsprechenden Messeinrichtung aufnehmen, spannen, bearbeiten und/oder vermessen, auch wenn die Werkstücke, wie üblich, über keine exakt konzentrisch ausgebildeten Fasen verfügen. Darüber hinaus ist es auch möglich, diese Spannelemente als Stufenelemente, ähnlich eines Stufendorns, auszuführen, wie auch die beidseitig aus dem Werkstück hervorragenden Enden des Spannelements im Durchmesser um ein entsprechendes Maß zu reduzieren, um das Werkstück allseitig bearbeiten oder vermessen zu können. Ein weiterer Vorteil der Erfindung besteht darin, auch sehr schmale Spannelemente herstellen und für derartige Aufgaben einsetzen zu können, sowie auch bereits vorhandene Spannelemente nachträglich auf die gewünschte Länge herunter erodieren zu lassen. Auf diese Weise ist es beispielsweise möglich, Spannelemente mit einem Durchmesser von 16 - 60 mm und einer Breite vom 3 bis 12 mm herzustellen.

Wird der Spannvorgang mittels aufeinandergleitenden, kegelförmigen Flächen vollzogen, so wird bei Spannsystemen das Werkstück oder Werkzeug zwar kraftschlüssig, aber nur bedingt formschlüssig, gespannt. Das liegt daran, dass sich während des Spannvorgangs die Radien der sich berührenden Kegelflächen ändern. Werden die Tragstege des Spannelements auf die Mantelfläche eines größer werdenden Stützelements hin zubewegt, so wird der Kraftschluss vom Zentrum auf die Randzonen der Tragstege verlagert. Im Gegensatz dazu wird der Kraftschluss wieder von den Randzonen der Tragstege zum Zentrum hin verlagert, wenn die Tragstege auf die Mantelfläche eines sich verjüngenden Stützelementes treffen.

Um den Einfluss dieses unabänderlichen Zusammenhangs zu minimieren wird erfindungsgemäß vorgeschlagen, die auf eine kegelförmige Stützfläche treffende Tragstegbreite auf ein Minimum zu reduzieren und dafür die Anzahl der Tragstege eines Spannelementes so weit wie möglich anzuheben.

Wie Versuche und die nachfolgende Berechnung zeigen, ist es bei einem erfindungsgemäßen Spannelement möglich, den radialen Abstand, zwischen der Oberfläche eines Stützelements und der Wölbung eines mit einem geringeren Radius auf dieser Oberfläche anliegenden Tragstegs auf unter 1 $\mu$m zu begrenzen und damit auch die Rundlaufabweichung unter 1 $\mu$m zu halten.

Dieser Abstand **A** ergibt sich aus der Beziehung

$$A = r - R + (R^2 - b^2)^{0,5} - (r^2 - b^2)^{0,5}$$

wenn für **r** der kleinere Radius, für **R** der größere Radius und für **b** die halbe Stegbreite eingesetzt wird.

Dies ist sinnvoll und auch praktikabel, da es bei den erfindungsgemäßen Spannelementen, die insbesondere für die mechanische Endbearbeitung und Fertigungskontrolle vorgesehen sind, weniger auf große Spannkräfte als vielmehr auf eine hohe Rundlaufgenauigkeit und eine gute Reproduzierbarkeit ankommt.

Es ist aber auch möglich Spannelemente mit wesentlich breiteren Stegen zu versehen, wenn dafür das Stützelement dementsprechend schmale hervorstehend ausgebildete Stützflächen aufweist. Die Umrisskanten derartiger schmaler Stützflächen lassen sich leicht und sehr präzis herstellen.

Ein solches erfindungsgemäßes Spannelement lässt sich sehr einfach und günstig als Rohling im Laser-Schmelzverfahren herstellen, der nach dem Härten bzw. Vergüten vorzugsweise nur noch an seinen Anlageflächen, das heißt innen und außen sowie zumindest einer seiner Stirnflächen, in einer Aufspannung überschliffen werden muss, um eine möglichst hohe, vorzugsweise nahezu 100-prozentige Koaxialität der Innen- zur Außenkontur eines solchen Spannelements zu erzielen. Als Werkstoff wurde bisher der Werkzeugstahl 1.2709 verwendet, der sich gut wärmebehandeln und beschichten lässt. Im Zuge dieser sich rasch weiterentwickelten Technologie kann davon ausgegangen werden, dass bereits in absehbarer Zeit auch weitere hochwertige und noch besser dafür geeignetere Werkstoffe zur Herstellung derartiger Spannelemente zur Verfügung stehen werden.

Versuche haben gezeigt, dass es ohne Weiters möglich ist, bei der Wandstärke der elastischen Zwischenglieder bis auf 0,4 mm herunterzugehen und damit Spannbereiche, bei einem entsprechenden Spanndurchmesser sowie der entsprechenden Anzahl von Tragstegen und elastischen Zwischengliedern, von 0,1 bis 0,5 mm zu erreichen.

Weitere bevorzugte Ausführungsformen der Erfindung sind in den Ansprüchen 2 bis 9 offenbart.

Die Erfindung sowie weitere Vorteile derselben werden nachfolgend anhand der in den Zeichnungen dargestellter Ausführungsformen näher erläutert. Dabei zeigen

Fig. 1          eine stirnseitige Ansicht eines Spannelements auf einem kegelförmigen Stützelement zum Spannen eines als Zahnrades ausgebildeten Werkstücks,

Fig. 2          einen vergrößerten Ausschnitt des Bereiches A der Fig. 1,

Fig. 3          eine Draufsicht auf eine weitere, zweite Ausführungsform eines Spannelements,

Fig. 4          eine Schnittansicht entlang der Linie a-a durch das Spannelement nach Fig. 3,

Fig. 5          eine Schnittansicht entlang der Linie b-b durch das Spannelement nach Fig. 3,

Fig. 6          eine Schnittansicht entlang der Linie c-c durch das Spannelement nach Fig. 5,

Fig. 7      eine perspektivische Darstellung des Spannelements der Fig. 3,

Fig. 8      eine Draufsicht auf eine weitere, dritte Ausführungsform eines Spannelements,

Fig. 9      eine Schnittansicht entlang der Linie d-d durch das Spannelement nach Fig. 8,

Fig. 10     eine Schnittansicht entlang der Linie e-e durch das Spannelement nach Fig. 8,

Fig. 11     eine Schnittansicht entlang der Linie g-g durch das Spannelement nach der Fig. 10,

Fig. 12     eine perspektivische Darstellung des Spannelements der Fig. 8,

Fig. 13     eine stirnseitige Ansicht eines Spannelements zur Aufnahme zwischen den Spitzen einer Bearbeitungs- oder Messmaschine mit einem als Kegelrad ausgebildeten Werkstück,

Fig. 14     eine Schnittansicht entlang der Linie h-h durch das Spannelement nach Fig. 13,

Fig. 15     eine Schnittansicht entlang der Linie j-j durch das Spannelement nach Fig. 13,

Fig. 16     eine perspektivische Darstellung des Spannelements der Fig. 13.

Fig. 17 und 18     Prinzipskizzen zur Erläuterung der Formschlussabweichung beim Aufeinandertreffen von kegelförmigen Flächen mit unterschiedlichen Radien und des dabei entstehenden Spaltes A, und

Fig. 19 bis 22     unterschiedlich ausgebildete, mäanderförmige Zwischenglieder als Verbindung benachbarter Tragstege.

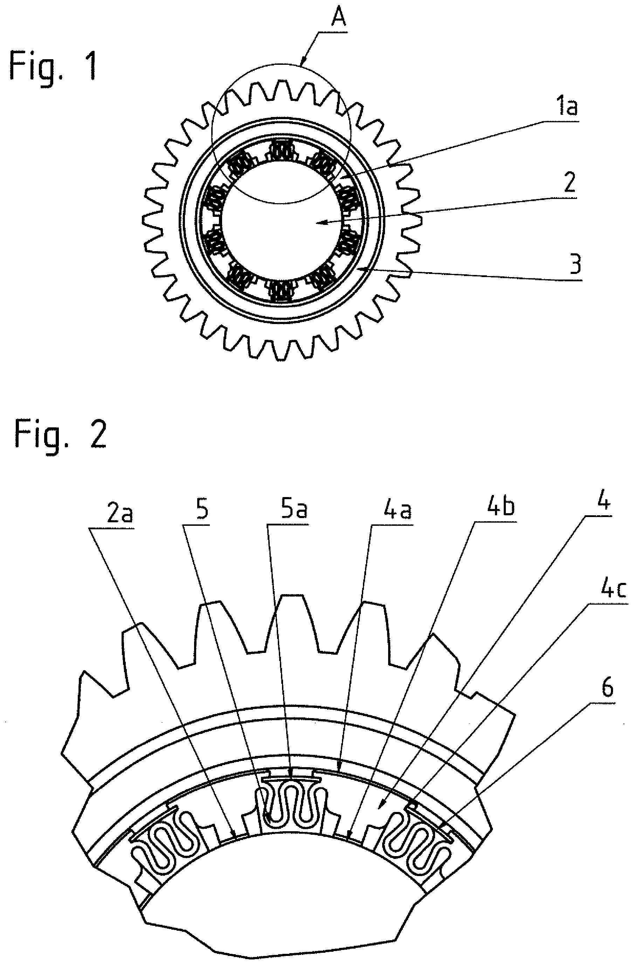

Das in den Figuren 1 und 2 dargestellte Spannelement 1a, das sich zwischen einem kegelförmigen Stützelement 2 und einem als Zahnrad ausgebildeten Werkstücks 3 befindet, verfügt als Beispiel bei einem Spanndurchmesser von 40 mm über zehn Tragstege 4 und zehn elastische Zwischenglieder 5, die in diesem Fall gleichmäßig über den Umfang des Spannelementes 1a verteilt sind.

In einer in den Figuren nicht dargestellten weiteren bevorzugten Ausführungsform ist es aber auch möglich mehrere Tragstege über biegeelastische Brücken miteinander tangential zu verbinden und die elastischen Zwischenglieder in beliebiger Folge dazwischen anzuordnen. Insoweit kann jeweils ein elastisches Zwischenglied zwischen zwei oder mehreren miteinander verbundenen Tragstegen angeordnet sein.

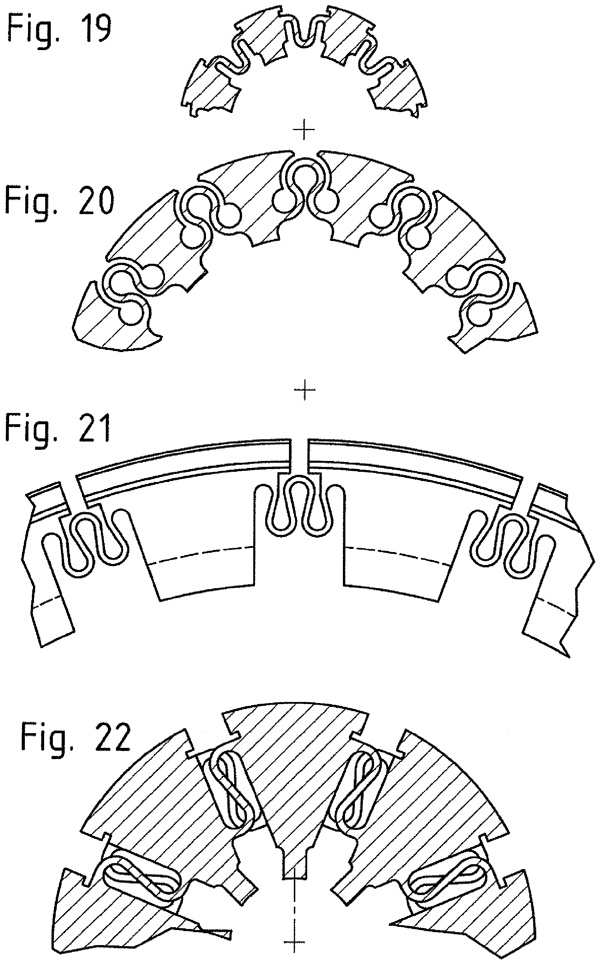

Die elastischen Zwischenglieder 5 sind vorzugsweise mäanderförmig gestaltete Verbindungen zwischen zwei benachbarten Tragstegen. Sie können verschiedenartig, wie beispielsweise in den Figuren 1,2,3,6,7,9,10,12,19, 20 und 21 als durchgehend gleichartig profilierte, oder wie in Figur 22 dargestellt, als voneinander getrennte, hintereinander angeordnete, spiegelbildlich gestaltete Strukturen, ausgeführt sein.

Die mit den elastischen Zwischengliedern 5 verbundenen Tragstege 4 weisen zum Werkstück 3 hin einen relativ breiten Rücken 4a auf, während die am Stützelement 2 anliegenden Stege 4b der Tragstege 4 bewusst schmal ausgeführt sind. Wie bereits erwähnt hat die Breite der Stege 4b Einfluss auf die erzielbare Rundlaufgenauigkeit.

Beim Spannen werden das Spannelement 1a und/oder das Stützelement 2 axial soweit zueinander verschoben bis die Tragstege 4 mit Ihren Rücken 4a das Werkstück 3 und mit ihren Stegen 4b das Stützelement 2 kraftschlüssig miteinander verbinden.

Wie in den Figuren 1 und 2 dargestellt, besteht die Möglichkeit, die elastischen Zwischenglieder 5 über sogenannte Segmentstreifen 6 nach außen hin abzudecken. Diese Segmentstreifen 6 werden vorzugsweise aus dünnem Federbandstahl hergestellt und über die gesamte Länge des Spannelements 1a in die dafür vorgesehenen Ausnehmungen 4c der Tragstege eingeschoben. Die Segmentstreifen 6 liegen danach an den äußeren Schultern der Ausnehmungen 4c der Tragstege 4 an und stützen sich an der mittleren Wölbung 5a der elastischen Zwischenglieder 5 ab.

Es ist aber auch möglich speziell dafür hergestellte Kunststoffstreifen einzusetzen, und/oder die Hohlräume, die zumindest teilweise von den mäanderförmigen Strukturen ausgebildet werden mit einem Füllmaterial auszufüllen.

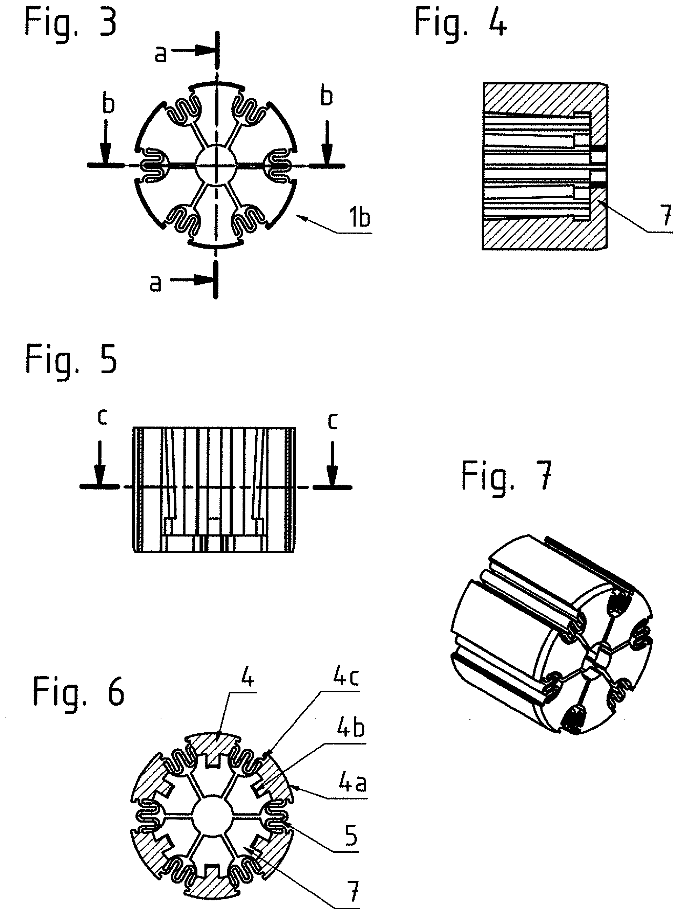

Das Spannelement 1b der Figuren 3 bis 6 entspricht im Wesentlichen dem Spannelement 1a der Figuren 1 und 2. Der Unterschied besteht lediglich darin, dass die Tragstege 4 des Spannelements 1b eine stirnseitige Schulter 7 aufweisen. Diese Schultern 7 dienen dazu, das Spannelement 1b über eine entsprechende, hier nicht dargestellte Einrichtung, beim Spannen und Entspannen eines entsprechenden Werkstücks 3 axial zu betätigen.

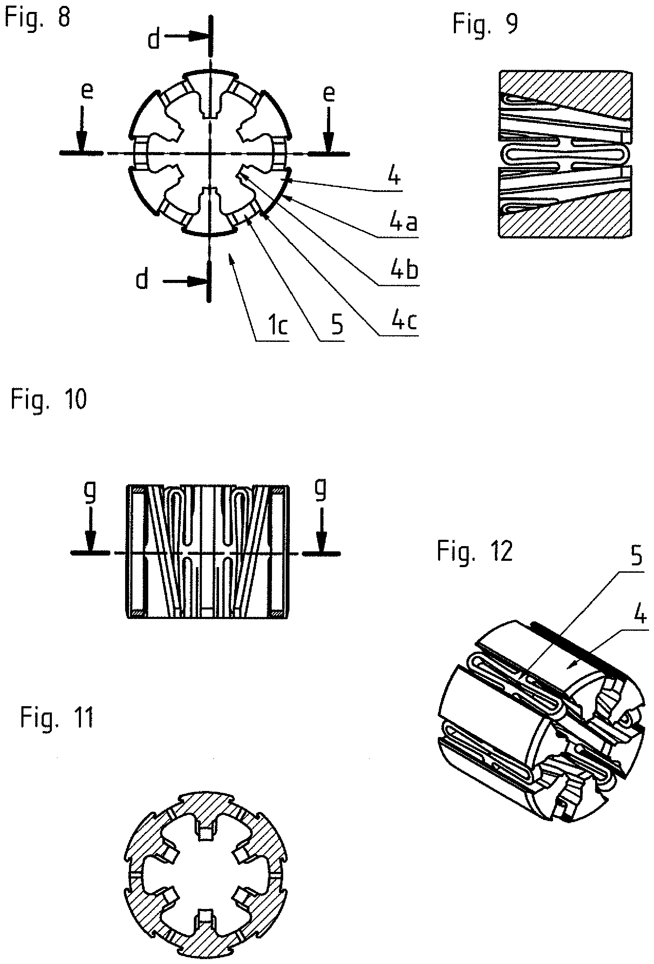

Auch das Spannelement 1c der Figuren 8 bis 12 entspricht im Wesentlichen dem Spannelement 1a der Figuren 1 und 2. Der Unterschied hierbei besteht darin, dass die elastischen Zwischenglieder 5 des Spannelements 1c in Form eines eine Doppelschleife bildenden Mäanders ausgeführt sind.

Die Tragstege 4 verfügen bei dieser Ausführungsform über keine stirnseitigen Schultern 7 und es wird auch keine entsprechende Einrichtung zum Entspannen des Werkstücks 3 benötigt, da die Stege 4b der Tragstege 4 sowie das Stützelement 2 einen wesentlich steileren Kegel aufweisen, um eine Selbsthemmung beim Entspannen des Werkstücks 3 ausschließen zu können.

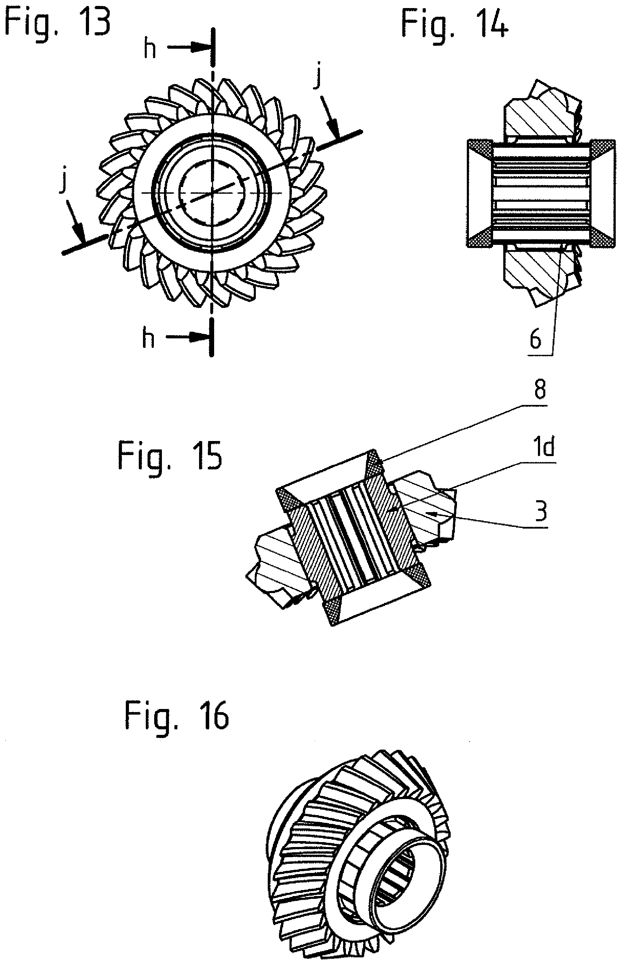

Die Figur 13 zeigt eine weitere Ausführungsform ähnlich der Figur 1. Der Unterschied besteht zum einen darin, dass bei dieser Ausführung kein separates Stützelement 2 erforderlich ist, da das Spannelement 1d hierbei zwischen den Spitzen einer Bearbeitungs- oder Messmaschine aufgenommen wird, und zum andern, dass der Außendurchmesser des Spannelements 1d auf beiden Seiten soweit reduziert ist, dass das geometrisch auf seine Bohrung bezogene Werkstück 3 rundum in einer Aufspannung bearbeitet oder gemessen werden kann. Die elastischen Zwischenglieder 5 dieses Spannelements 1d sind in ähnlicher Weise wie die des Spannelements 1a ausgeführt und mittels Segmentstreifen 6 nach außen hin abgedeckt. Zur stirnseitigen Abdichtung des Spannelements 1d dienen hierbei sogenannte Dichtscheiben 8, die sich auf den Spitzen der Bearbeitungsmaschine abstützen.

Durch entsprechende an die Stirnflächen der Spannelemente 1a und 1b anlegbare Planscheiben lässt sich der Innenraum zwischen den völlig geschlossenen Spannelementen 1a und 1b entsprechend der Figuren 1 bis 7 und den dazugehörenden Stützelementen 2 hermetisch und damit staubfrei verschließen.

Die Bezugszeichen 2 bis 8 beziehen sich auf die Teile aller Ausführungsformen und sind deshalb nur bedarfsweise den einzelnen Figuren hinzugefügt.

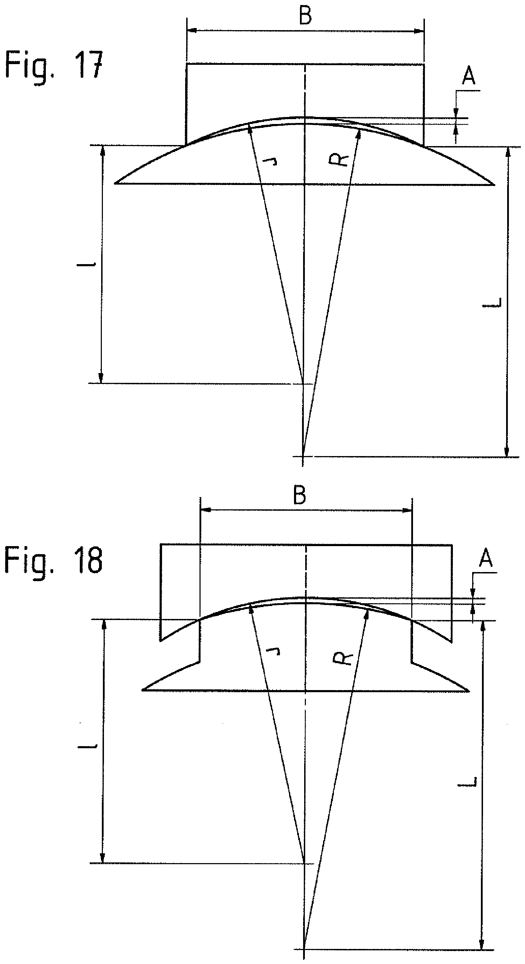

Zur Verdeutlichung der Formschlussabweichung beim Aufeinandertreffen von kegelförmigen Flächen mit unterschiedlichen Radien und des dabei entstehenden Spaltes A kann auf die Prinzipskizzen nach Fig. 17 und 18 verwiesen werden. Der dort dargestellte Abstand A zwischen den gewölbten Flächen, oder mit anderen Worten der Spalt A ergibt sich aus der Beziehung

$$A = r - R + (R^2 - b^2)^{0,5} - (r^2 - b^2)^{0,5}$$

Wobei

r der kleinere Radius,
R der größere Radius und
b die halbe Stegbreite

sind.

Abschließend sei noch darauf hingewiesen, dass auch andere Spannelemente unabhängig von ihrer Form, rund oder eckig, sowie auch andere unter Anwendung der erfindungsgemäßen Neuerung hergestellte Maschinenbauteile, wie Zentrier- und Gleitlager, Brems-, Streck- und Ausgleichselemente und dgl., diesem Schutzanspruch unterliegen.

Obwohl sich die Technologie der modernen 3D-Herstell-Verfahren für all diese Elemente als vorteilhaft erwiesen hat, können auch andere Werkstoffe und Herstellverfahren dafür verwendet werden.

**Bezugszeichenliste**

1       Spannelement allgemein
1a      Spannelement der Fig. 1 und 2
1b      Spannelement der Fig. 3 bis 7
1c      Spannelement der Fig. 8 bis 12
1d      Spannelement der Fig. 13 bis 16
2       Stützelement
2a      Stützfläche des Spannelements
3       Werkstück (Werkzeug)
4       Tragsteg
4a      Rücken des Tragstegs 4
4b      Steg des Tragstegs 4
4c      Ausnehmung des Tragstegs 4
5       elastisches Zwischenglied
5a      Wölbung des elastischen Zwischenglieds 5
6       Segmentstreifen
7       Schulter
8       Dichtscheibe

**Patentansprüche**

1.  Spannelement (1) zur Positionierung und/oder Fixierung eines Werkstücks (3) oder Werkzeugs, umfassend eine Mehrzahl von Tragstegen (4) und eine Mehrzahl von elastischen Zwischengliedern (5), wobei sich das Spannelement (1) durch Dehnung oder Stauchung der elastischen Zwischenglieder (5) aufweiten oder zusammendrücken lässt, **dadurch gekennzeichnet,**

**dass** die Tragstege (4) und die elastischen Zwischenglieder (5) einstückig miteinander ausgebildet und endlos miteinander verbunden sind.

2. Spannelement (1) nach Anspruch 1, **dadurch gekennzeichnet,**
**dass** die elastischen Zwischenglieder (5) so ausgeführt sind, dass die Tragstege (4) parallel zu einem Bezugssystem, des Spannelements (1) an die ihnen zugewandten Flächen anlegbar sind.

3. Spannelement (1) nach Anspruch 1 oder 2, **dadurch gekennzeichnet,**
**dass** jeweils ein elastisches Zwischenglied (5) zwischen zwei oder mehreren miteinander verbundenen Tragstegen (4) angeordnet ist.

4. Spannelement (1) nach einem der vorherigen Ansprüche, **dadurch gekennzeichnet,**
**dass** die elastischen Zwischenglieder (5) als mäanderförmige Verbindung der Tragstege (4) ausgeführt sind.

5. Spannelement (1) nach Anspruch 4, **dadurch gekennzeichnet,**
**dass** die mäanderförmigen Strukturen der elastischen Zwischenglieder (5) mittels Segmentstreifen (6) abdeckbar sind.

6. Spannelement (1) nach Anspruch 4 und 5, **dadurch gekennzeichnet,**
**dass** die mäanderförmigen Strukturen der elastischen Zwischenglieder (5) mit einem elastischen Füllmaterial ausgefüllt sind.

7. Spannelement (1) nach einem der vorherigen Ansprüche 1 bis 6, **dadurch gekennzeichnet,**
**dass** die elastischen Zwischenglieder (5) so ausgeführt sind, dass der sich während des Fixier- und/oder Spannvorgangs ergebende maximale Spalt (A), zwischen der Wölbung der stirnseitigen Fläche an den Stegen (4b) der Tragstege (4) und der Stützfläche (2a) des Stützelements (2), kleiner als die zulässige Rundlaufabweichung ist.

8. Spannelement (1) nach einen der vorherigen Ansprüche 1 bis 7, **dadurch gekennzeichnet,**
**dass** das Spannelement (1) über seine planen Stirnflächen abdichtbar ist.

# Fig. 1

A

1a

2

3

# Fig. 2

2a  5  5a  4a  4b  4  4c  6

Fig. 3

Fig. 4

Fig. 5

Fig. 6

Fig. 7

Fig. 8

Fig. 9

Fig. 10

Fig. 11

Fig. 12

Fig. 13

h

j

j

h

Fig. 14

6

8

1d

3

Fig. 15

Fig. 16

Fig. 17

Fig. 18

Fig. 19

Fig. 20

Fig. 21

Fig. 22

**Europäisches Patentamt**
**European Patent Office**
**Office européen des brevets**

# EUROPÄISCHER RECHERCHENBERICHT

Nummer der Anmeldung

EP 18 16 0486

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 482 024 C (OTTO MAX MUELLER) 5. September 1929 (1929-09-05) * Abbildung 7 * ----- | 1-5,7,8 | INV. B23Q3/06 B23B31/117 B23B31/20 B23B31/40 B23Q3/10 |
| X | EP 2 813 306 A1 (FAHRION EUGEN GMBH [DE]) 17. Dezember 2014 (2014-12-17) * Absatz [0050]; Abbildungen 1-7 * ----- | 1-3,7,8 | |
| X | DE 951 846 C (SPIETH RUDOLF) 8. November 1956 (1956-11-08) * das ganze Dokument * ----- | 1-8 | |
| X | EP 1 629 937 A1 (SCHUNK GMBH & CO KG [DE]) 1. März 2006 (2006-03-01) * Anspruch 1; Abbildungen 1-4,11 * ----- | 1-3,7,8 | |

| RECHERCHIERTE SACHGEBIETE (IPC) |
|---|
| B23Q B23B |

Der vorliegende Recherchenbericht wurde für alle Patentansprüche erstellt

| Recherchenort | Abschlußdatum der Recherche | Prüfer |
|---|---|---|
| München | 7. September 2018 | Lasa Goñi, Andoni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 16 0486

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-09-2018

| Im Recherchenbericht angeführtes Patentdokument | | Datum der Veröffentlichung | Mitglied(er) der Patentfamilie | | Datum der Veröffentlichung |
|---|---|---|---|---|---|
| DE 482024 | C | 05-09-1929 | KEINE | | |
| EP 2813306 | A1 | 17-12-2014 | DE 102014202151 | A1 | 08-01-2015 |
| | | | EP 2813306 | A1 | 17-12-2014 |
| | | | US 2014367929 | A1 | 18-12-2014 |
| DE 951846 | C | 08-11-1956 | KEINE | | |
| EP 1629937 | A1 | 01-03-2006 | AT 421404 | T | 15-02-2009 |
| | | | CN 1740576 | A | 01-03-2006 |
| | | | EP 1629937 | A1 | 01-03-2006 |
| | | | ES 2318223 | T3 | 01-05-2009 |
| | | | KR 20060050696 | A | 19-05-2006 |
| | | | US 2006104711 | A1 | 18-05-2006 |

EPO FORM P0461

Für nähere Einzelheiten zu diesem Anhang : siehe Amtsblatt des Europäischen Patentamts, Nr.12/82